# EUROPEAN PATENT APPLICATION

(11) **EP 0 898 123 A2**
(43) Date of publication of application: **24.02.1999**
(21) Application number: 98202788.0
(22) Date of filing: 20.08.1998
(51) Int. Cl.: F24D 10/00, F24D 12/02

(54) **Heating system and container provided with heating boilers and control unit for use therein**

(30) Priority: 20.08.1997 NL 1006810
(71) Applicant: Woningstichting Den Helder, 1784 MC Den helder (NL)
(72) Inventor: Oostendorp, Johannes Alexander, 1782 ND Den Helder (NL)
(74) Representative: Van den Heuvel, Henricus Theodorus

(57) **Abstract**

Heating systems for heating a building such as a block of flats, office building and the like usually comprise at least one heating boiler coupled to one or more radiators.

Heating systems must have sufficient capacity to satisfy the greatest possible energy requirement of the building.

Known heating systems therefore have the drawback of comprising either one large heating boiler or a plurality of small heating boilers.

The invention provides a heating system comprising a plurality of heating boilers connected in cascade and a control unit for controlling the heating boilers and for switching on and/or off one or more heating boilers subject to the heat required, wherein the heating boilers and the control unit are placed together in one container.

## Description

The invention relates to a heating system for heating a building and the like, comprising at least one heating boiler coupled to one or more radiators.

Such a heating system is known and is used for instance to heat blocks of flats, office buildings and the like.

Such a heating system must have sufficient capacity to satisfy the greatest possible energy requirement of the building.

A drawback of a known heating system is that it must comprise either one large heating boiler or a plurality of small heating boilers.

The invention has for its object to provide a heating system which does not have the above stated drawback. To this end a heating system according to the invention has the feature that the heating system comprises a plurality of heating boilers connected in cascade and a control unit for controlling the heating boilers and for switching on and/or off one or more heating boilers subject to the heat required, wherein the heating boilers and the control unit are placed together in one container.

The advantage of the cascade arrangement and the control unit is that one or more heating boilers can be switched on depending on the heat requirement of the users of the building. Thus is achieved that the desired amount of heat is available at any moment at the lowest possible energy cost.

An embodiment of a heating system according to the invention has the feature that the container can be placed integrally in or on the building.

The advantage of this embodiment is that the container can be wholly manufactured in the factory with the heating boilers and the control unit therein. On site the container then only has to be placed on the roof of the building, for instance with a crane. Finally, the water and gas connections will then also have to be connected.

An embodiment of a heating system according to the invention has the feature that the container is manufactured from aluminium.

The advantage of aluminium is that a sufficiently sturdy and durable container can hereby be manufactured from relatively light material.

An embodiment of a heating system according to the invention has the feature that the container is provided with connecting openings for coupling to the one or more radiators, a gas supply opening, and with an input for receiving at least one operating signal from a thermostat unit.

Setting the heating system into operation is hereby further simplified because all couplings can be arranged outside the container.

The invention also relates to a container provided with the heating boilers and the control unit for use in a heating system.

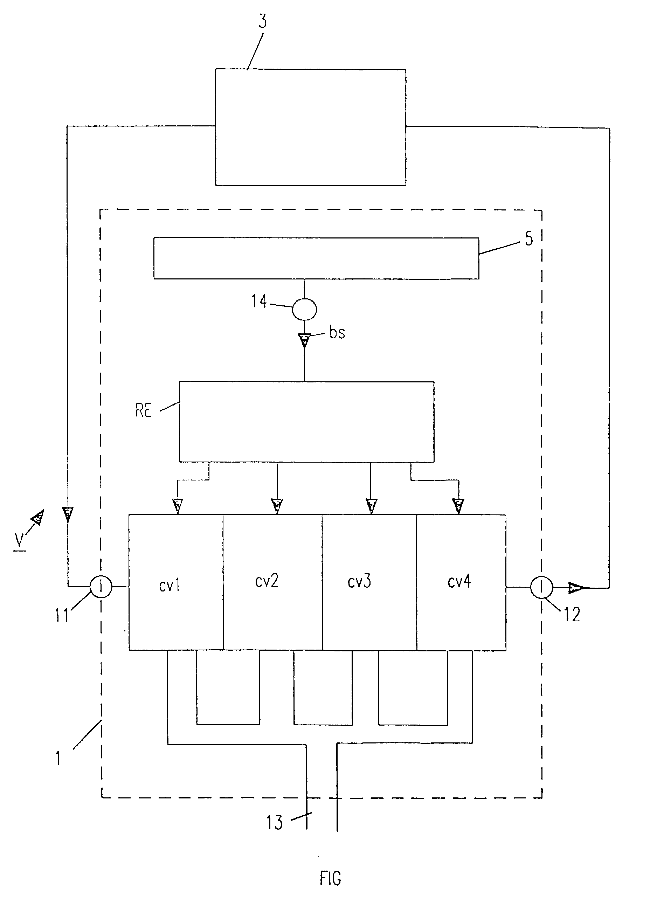

The heating system according to the invention will be elucidated hereinbelow by way of example with reference to the following drawing. Herein:
the figure shows a schematic embodiment of a heating system according to the invention, and

The figure shows a schematic embodiment of a heating system V. The heating system comprises a container 1 which in this embodiment contains four heating boilers cv1, cv2, cv3, cv4 coupled in cascade and a control unit RE. The container further has an inlet 11 and an outlet 12 for respectively receiving and delivering water from and to radiators 3 which are shown schematically in the figure.

Container 1 can be provided with for instance gas for the heating boilers via an inlet 13.

Container 1 further contains an input 14 for receiving an operating signal bs from a thermostat unit 5 for operating control unit RE.

The operation of heating system V according to the invention is as follows. Subject to the amount of energy demanded in a building, such as a block of flats or for instance an office building, thermostat unit 5 generates the operating signal bs to input 14 of container 1. Control unit RE determines on the basis of the received operating signal bs the number of heating boilers which must be activated. The control unit also determines the capacity at which the active heating boilers have to function.

The optimum is hereby achieved in respect of the efficiency of the heating boilers which are in use.

It will be apparent that the number of heating boilers can be chosen subject to for instance the maximum output to be supplied.

Container 1 can already be made fully operational in the factory, whereby only the water connections for the radiators, the gas supply connection and the control wire/wires have to be connected at the location of the building.

The container can for instance be placed integrally on the roof of the building with a crane.

In order to limit the weight of the container, it is advantageous to manufacture the container from aluminium.

It will be apparent to the skilled person that the invention is not limited to the above described embodiment.

## Claims

1. Heating system for heating a building and the like, comprising at least one heating boiler coupled to one or more radiators, **characterized in that** the heating system comprises a plurality of heating boilers connected in cascade and a control unit for controlling the heating boilers and for switching on and/or off one or more heating boilers subject to the heat required, wherein the heating boilers and the control unit are placed together in one container.

2. Heating system as claimed in claim 1, **characterized in that** the container can be placed integrally in or on the building.

3. Heating system as claimed in claim 1 or 2, **characterized in that** the container is manufactured from aluminium.

4. Heating system as claimed in claim 1, 2 or 3, **characterized in that** the container is provided with connecting openings for coupling to the one or more radiators, a gas supply opening, and with an input for receiving at least one operating signal from a thermostat unit.

5. Container provided with the heating boilers and the control unit for use in a heating system as claimed in one or more of the foregoing claims.
